# EUROPÄISCHE PATENTANMELDUNG

(11) **EP 0 921 331 A2**
(43) Veröffentlichungstag der Anmeldung: **09.06.1999**
(21) Anmeldenummer: 98250401.1
(22) Anmeldetag: 19.11.1998
(51) Int. Cl.: F16D 65/74, B61H 15/00

(54) **Betätigungseinrichtung für verschleissspielbehaftete Maschinenelemente, insbesondere für Bremsen von Schienenfahrzeugen**

(30) Priorität: 08.12.1997 DE 19755896
(71) Anmelder: MANNESMANN Aktiengesellschaft, 40213 Düsseldorf (DE)
(72) Erfinder: Niederstadt, Jörg, Dr.-Ing., 30966 Hemmingen, Devese (DE); Stoffels, Ralf, Dipl.-Ing., 29593 Schwienau (DE); Lehnert, Erhard, 31311 Uetze (DE); Kemner, Axel, Dipl.-Ing., 30916 Isernhagen (DE)
(74) Vertreter: Presting, Hans-Joachim, Dipl.-Ing.

(57) **Zusammenfassung**

Um bei einer Betätigungseinrichtung für verschleißspielbehaftete Maschinenelemente, insbesondere für Bremsen von Schienenfahrzeugen, mit einer druckmittelbetriebenen Kolben-Zylinder-Anordnung, deren Kolbenstange mit einer verschleißspielausgleichenden Nachstelleinrichtung in Wirkverbindung steht,
einen einfachen und kompakten Aufbau zu realisieren und weiterhin Voraussetzungen für die aktive Integration in ein übergeordnetes Gesamtsystem zu schaffen,
wird vorgeschlagen,
daß die Nachstelleinrichtung aus einem in der Kolben-Zylinder-Anordnung kolbenbodenseitig integrierten und als Endanschlag für einen Bremskolben (4) ausgebildeten Nachstellkolben (11) aufgebaut ist, der zur axialen Arretierung einen dem Zylinderboden (2) zugewandten koaxialen Kolbenstangenansatz aufweist, der gemeinsam mit einem sich am Zylinderboden (2) abstützenden Halteelement (15) eine Arretierungsanordnung bildet, welche eine Bewegung des Nachstellkolbens (11) in Richtung des Bremskolbens (4) ermöglicht und die Gegenbewegung sperrt, wobei zur Bewegung des Nachstellkolbens (11) ein zwischen dem Zylinderboden (2) und dem Nachstellkolben (11) gebildeter Zylinderraum (14) über einen Druckmittelanschluß (16) mit Druckmittel beaufschlagbar ist.

## Beschreibung

Die Erfindung betrifft eine Betätigungseinrichtung für verschleißspielbehaftete Maschinenelemente, insbesondere für Bremsen von Schienenfahrzeugen, gemäß dem Oberbegriff des Patentanspruches 1.

Als verschleißspielbehaftete Maschinenelemente im Sinne der vorliegenden Erfindung werden Maschinenelemente wie Kupplungen oder Bremsen angesehen. Derartige Maschinenelemente werden insbesondere zur Übertragung von Antriebs- bzw. Bremskräften bei Schienenfahrzeugen eingesetzt. Zum Unterbrechen und Schließen des Kraftflusses kommen Beläge zum Einsatz, die zum einen hohe thermische Beanspruchungen standhalten und zum anderen einen günstigen Kraftflußverlauf ermöglichen. Diese Beläge unterliegen einem Verschleiß, der ein sich allmählich vergrößerndes Verschleißspiel verursacht. Zum Ausgleich dieses Verschleißspiels sind Nachstelleinrichtungen bekannt.

So geht beispielsweise aus der EP 0 174 690 eine Nachstelleinrichtung nach Art einer Stellmutter-Spindel-Baugruppe zum Verschleißspielausgleich für Bremsen hervor. Diese Nachstelleinrichtung baut auf einer Steuerhülse auf, die unter Federkraft stehend über eine erste Kupplung verhindert, daß eine Stellmutter über eine Drehbewegung eine Längsverstellung der Kolbenspindel und insoweit eine Nachstellung bewirkt. Nach Durchlaufen eines vorbestimmten Spielweges wird durch Verschieben der Kolbenstange über einen bestimmten Weg hinaus die erste Kupplung gelöst, so daß die Verstellung des Spielweges entsprechend dem eingetretenen Belagverschleiß erhöht werden kann. Eine weitere Kolbenvorschubbewegung hat das Einkuppeln einer zweiten Kupplung zur Folge, so daß daraufhin die Verstellung der Stellmutter auf der Spindel gestoppt wird. Dieser komplizierte Mechanismus für das Ein- und Auskuppeln der Stellmutter verursacht einen hohen Bauteil- und Montageaufwand für die Fertigung dieser Nachstelleinrichtung.

Wie aus der DE-OS 22 01 082 hervorgeht, wird eine Nachstelleinrichtung für Schienenfahrzeugbremsen in Verbindung mit einer Kolben-Zylinder-Anordnung zur Bremsbetätigung und einem Bremsgestänge zur Bremskraftübertragung eingesetzt. Die bekannten Betätigungseinrichtungen bestehen demnach aus mehreren einzelnen zu verbindenden Baugruppen, was deren Montage aufwendig gestaltet. Weiterhin sind bekannte Betätigungseinrichtungen autarke Systeme und daher nicht hinsichtlich ihres Betriebszustandes und Verschleißzustandes von einem übergeordneten Gesamtsystem aus überwachbar und von diesem differenziert ansteuerbar. Die Voraussetzung für eine aktive Integration in ein übergeordnetes Gesamtsystem sind bei bekannten Betätigungseinrichtungen demnach nicht gegeben.

Der Erfindung liegt daher die Aufgabe zugrunde, eine Betätigungseinrichtung, insbesondere für Bremsen von Schienenfahrzeugen zu schaffen, die zum einen einfach und kompakt aufgebaut ist und zum anderen Voraussetzungen für die aktive Integration in ein übergeordnetes Gesamtsystem erfüllt.

Die Erfindung wird ausgehend von einer Betätigungseinrichtung für verschleißspielbehaftete Maschinenelemente gemäß dem Oberbegriff des Patentanspruches 1 in Verbindung mit dessen kennzeichnenden Merkmalen gelöst.

Die Erfindung schließt die technische Lehre ein, daß die Betätigungseinrichtung für verschleißspielbehaftete Maschinenelemente aus einem in einer Kolben-Zylinder-Anordnung kolbenbodenseitig integrierten und als Endanschlag für einen Bremskolben ausgebildeten Nachstellkolben aufgebaut ist, der zur axialen Arretierung einen dem Kolbenboden zugewandten koaxialen Kolbenstangenansatz aufweist, der gemeinsam mit einem sich am Zylinderboden abstützenden Halteelement eine Arretierungsanordnung bildet, welche eine Bewegung des Nachstellkolbens in Richtung des Bremskolbens ermöglicht und die entsprechende Gegenbewegung sperrt. Dabei ist zur Bewegung des Nachstellkolbens ein zwischen dem Zylinderboden und dem Nachstellkolben gebildeter Zylinderraum über einen Anschluß mit Druckmittel beaufschlagbar.

Somit ist die Nachstelleinrichtung der Betätigungseinrichtung direkt in die Kolben-Zylinder-Anordnung integriert und bildet mit ihr eine kompakte Baueinheit. Die Nachstelleinrichtung zeichnet sich durch eine geringe Anzahl von Bauteilen und durch ihren insoweit einfachen Aufbau aus. Da der Nachstellkolben ebenso wie der Bremskolben separat über Druckmittel von außen her betreibbar ist, ist die Betätigungseinrichtung damit differenziert von einem übergeordneten Gesamtsystem aus ansteuerbar. Dieses ist eine entscheidende Voraussetzung für die Integration beispielsweise in ein elektronisch angesteuertes Bremssystem eines Schienenfahrzeuges.

Eine weitere diese Integrationsfähigkeit verbessernde Maßnahme besteht darin, daß eine elektrische Wegmeßeinrichtung - die beispielsweise nach Art eines Schiebewiderstandes oder auch berührungslos mittels einer induktiven oder kapazitiven Wegmeßeinrichtung ausgebildet ist - den Betrag des vom Bremskolben zurückgelegten Weges erfaßt und zur Ermittlung einer Nachstellaktion einer Elektronikeinheit eingangsseitig zur Verfügung stellt, die bei Erreichen eines Grenzwegbetrages ausgangsseitig ein Signal für die Nachstellaktion generiert. Damit ist die Betätigungseinrichtung auch bidirektional mit dem Gesamtsystem kommunizierend betreibbar, was insgesamt einen hohen Automatisierungsgrad gewährleistet.

Vorzugsweise weist zur Arretierung der Nachstelleinrichtung der Kolbenstangenansatz des Nachstellkolbens eine widerhakenartige Verzahnung auf, die über eine komplementär dazu ausgebildete Verzahnung an einem Halteelement rastend korrespondiert. Diese Arretierungsanordnung für die Nachstelleinrichtung zeichnet sich durch einen einfachen und zugleich zuverlässig wirkenden Aufbau aus. Zur Rückstellung der Nachstelleinrichtung ist vorzugsweise eine koaxial in den Kolbenboden geschraubte, mit einem endseitig zumindest innen konisch ausgebildeten Abschnitt des Halteelementes zusammenwirkende und das Halteelement über einen Konus aufspreizende Hohlschraube vorgesehen. Zur Aufspreizbarkeit ist das Halteelement mit mindestens zwei Längsschlitzen versehen.

Die Kolben-Zylinder-Anordnung besitzt vorteilhafter Weise ein zwischen dem Nachstellkolben und dem Bremskolben gebildeten Zylinderraum, der über einen Druckmittelanschluß zur Bewegung des Bremskolbens beaufschlagbar ist. Zur Rückstellung des Bremskolbens kann ein sich der Kolbenstange anschließendes Bremsgestänge oder eine in die Kolben-Zylinder-Anordnung integrierte und zwischen dem Bremskolben und dem Zylinderdeckel angeordnete Rückstellfeder vorgesehen sein.

Eine weitere die Erfindung verbessernde Maßnahme besteht darin, daß die Betätigungseinrichtung mit einer integrierten Feststellbremse ausgerüstet ist. Dafür ist der Bremskolben innen zylinderartig hohl ausgebildet und mit einem integrierten Feststellbremskolben versehen, der über eine Druckfeder betätigbar ist, wobei der Feststellbremskolben mit der Kolbenstange in Wirkverbindung steht. Zur Rückstellung und Arretierung des Feststellbremskolbens kann insbesondere eine der Druckfeder entgegensetzt wirkende und über einen Anschluß mit Druckmittel beaufschlagbare Druckkammer vorgesehen werden. Dabei kann zur Druckmittelbeaufschlagung die Kolbenstange mit einem vom Bereich des Feststellbremskolbens ausgehenden, längs der Kolbenstange verlaufenden und im Bereich ihres freien Endes in einen Druckmittelanschluß mündenden Druckmittelkanal ausgestattet sein. Alternativ dazu ist es auch denkbar, zur Druckmittelbeaufschlagung einen von einer Durchgangsbohrung im Feststellbremskolben ausgehenden und in eine als Druckmittelanschluß ausgebildete Durchgangsbohrung im Zylinderdeckel mündenden flexiblen Druckmittelschlauch zu verwenden. Ebenso kann auch eine von einer Durchgangsbohrung zur Druckkammer im Betriebsbremskolben ausgehende und parallel zur Kolbenstange verlaufende starre Rohrleitung, die über eine ringförmige Dichtung aus dem Zylinderdeckel längs bewegbar austritt, zur Druckmittelbeaufschlagung der rückstellenden Druckkammer der Feststellbremse verwendet werden.

Die vorstehend beschriebenen Ausgestaltungsformen der Erfindung beziehen sich speziell auf eine Anwendung bei einem Bremssystem, insbesondere einem Bremssystem von Schienenfahrzeugen. Die erfindungsgemäße Lösung kann jedoch gleichfalls auf alle gattungsgemäßen druckmittelbetriebenen Betätigungseinrichtungen angewendet werden, die zur Betätigung verschleißspielbehafteter Maschinenelemente eingesetzt werden, beispielsweise auch Kupplungen unterschiedlichster Art.

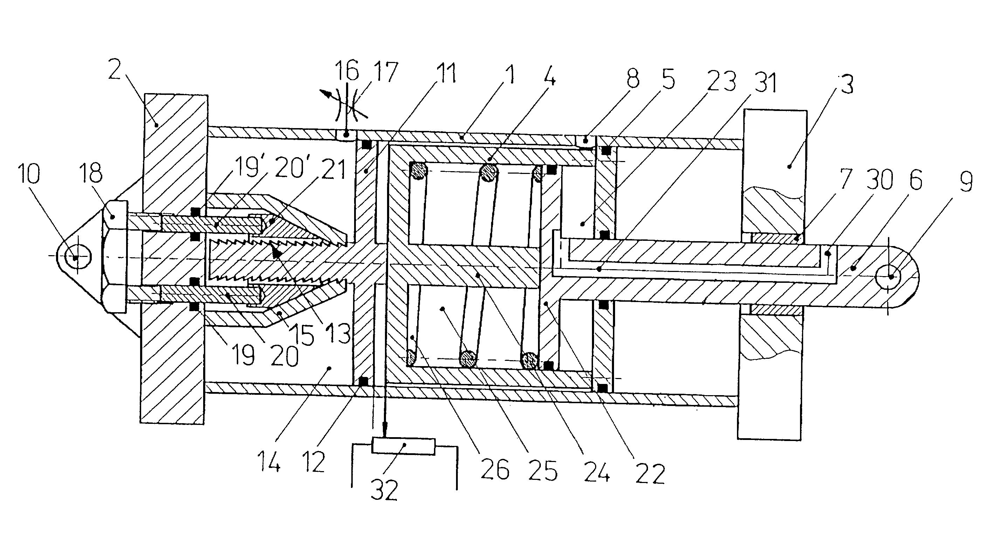

Weitere die Erfindung verbessernde Maßnahmen werden nachstehend gemeinsam mit der Beschreibung einer bevorzugten Ausführungsform der Erfindung anhand der einzigen Figur näher dargestellt. Die Figur zeigt einen Längsschnitt durch eine Betätigungseinrichtung für Bremsen von Schienfahrzeugen.

Die Betätigungseinrichtung besteht aus einer Kolben-Zylinder-Anordnung mit einem Zylinder 1, der endseitig mit einem Zylinderboden 2 sowie einem Zylinderdeckel 3 verschlossen ist. Innerhalb des Zylinders 1 befindet sich ein Bremskolben 4, der gegenüber der Wandung des Zylinders 1 mittels einer ringförmigen, in einer außenradialen Nut im Bremskolben 4 eingelassenen Dichtung 5 abgedichtet ist. Koaxial vom Bremskolben 4 geht eine den Zylinderdeckel 3 durchdringende Kolbenstange 6 zur Bremsbetätigung aus. Der Zylinderdeckel 3 ist an der Durchdringungsstelle mit einer ringförmigen Dichtung 7, die zugleich eine Führungsfunktion für Kolbenstange 6 ausübt, versehen. Am Zylinder 1 ist ein Druckmittelanschluß 8 für den Betriebsdruck vorgesehen. Wird über den Druckmittelanschluß 8 der Bremskolben 4 auf seiner der Kolbenstange 6 abgewandten Seite mit Druckmittel beaufschlagt, so fährt die Kolbenstange 6 aus. Die Rückstellung der Kolbenstange 6 kann durch ein in der Figur nicht dargestelltes, eine Gegenkraft erzeugendes Bremsgestänge dienen, das mit der Kolbenstange 6 der Kolben-Zylinder-Anordnung über eine kolbenstangenseitige Befestigungsbohrung 9 in Verbindung steht. Eine zylinderseitige Befestigungsbohrung 10 dient der ortsfesten Befestigung der Kolben-Zylinder-Anordnung in einem ebenfalls in der Figur nicht dargestellten Gestell in der Nähe der Bremse oder Bremsen eines Schienenfahrzeuges.

Die Kolben-Zylinder-Anordnung ist weiterhin mit einer im Bereich des Zylinderbodens 2 integrierten Nachstelleinrichtung ausgerüstet. Die Nachstelleinrichtung besitzt einen zylinderbodenseitigen Endanschlag für den Bremskolben 4 bildenden Nachstellkolben 11, der gegenüber der Wandung des Zylinders 1 mit einer ringförmigen in einer außenradialen Nut im Nachstellkolben 11 eingelassenen Dichtung 12 abgedichtet ist. Vom Nachstellkolben 11 geht koaxial in Richtung des Zylinderbodens 2 ein Kolbenstangenansatz aus. Der Kolbenstangenansatz ist außenradial mit einer widerhakenartigen Verzahnung 13 versehen. Die Verzahnung 13 greift in eine komplementär dazu ausgestaltete Verzahnung an der Stirnseite eines hülsenförmigen Halteelementes 15 ein. Das hülsenförmige Halteelement stützt sich an seinem der Verzahnung entgegengesetzten Ende am Zylinderboden 2 ab. Die widerhakenartige Verzahnung 13 ermöglicht eine Bewegung des Nachstellkolbens 11 in Richtung des Bremskolbens 4 zum Zwecke eines Verschleißspielausgleiches. Die Gegenbewegung ist aufgrund des Rastmechanismus, verursacht durch die widerhakenartige Ausgestaltung der Verzahnung 13, gesperrt, so daß der Nachstellkolben 11 seine Nachstell- und Anschlagfunktion ausüben kann. Damit ist ein stets kleiner Druckmittelverbrauch für den Betrieb des Bremskolbens 4 sichergestellt und die Ausfahrzeiten der Kolbenstange 6 können nahezu konstant gehalten werden, was vorteilhaft konstant bleibende Betätigungszeiten der nachgeschalteten Bremse bewirkt.

Die Nachstellbewegung des Nachstellkolbens 11 wird über einen zwischen dem Zylinderboden 2 und dem Nachstellkolben 11 gebildeten mit Druckmittel beaufschlagbaren Zylinderraum 14 vorgenommen. Die Beaufschlagung mit Druckmittel erfolgt dabei über einen Druckmittelanschluß 16 am Zylinder 1. Um die Druckmittelbeaufschlagung kontrolliert erfolgen zu lassen, ist der Druckmitttelanschluß 16 mit einer einstellbaren Drossel 17 versehen. Eine derartig kontrollierte Druckmittelbeaufschlagung kann auch entfallen, wenn die Nachstelleinrichtung eine Sperrklinke umfaßt, die pro Beaufschlagungsvorgang des Zylinderraumes 14 nur einen Zahnschritt für die Nachstellung ermöglicht.

Mit dem Wechsel von verschlissenen Bremsbelegen ist es notwendig, den Nachstellkolben 11 wieder in seine zylinderbodennahe in der Figur dargestellte Ausgangsposition zurückzustellen. Zum Rückstellen dient eine koaxial in den Zylinderboden 2 eingeschraubte Hohlschraube 18. Die Hohlschraube 18 drückt beim Einschrauben gegen mehrere ringförmig in den Zylinderboden eingelassene und jeweils mit Dichtungen 19, 19' ihm gegenüber abgedichtete Zylinderstifte 20, 20'. Die Zylinderstifte 20, 20' drücken infolge dessen gegen einen ringartig ausgebildeten Konus 21. Der Konus 21 spreizt das Halteelement 15 in seinem Verzahnungsbereich auf, so daß die Arretierung des Nachstellkolbens 11 gelöst ist und über die Kolbenstange 6 eine Rückstellung des Nachstellkolbens 11 erfolgen kann. Die Spreizbarkeit des Halteelementes 15 wird über mehrere im Verzahnungsbereich angeordnete in der Figur nicht dargestellte Längsschlitze ermöglicht.

Die Kolben-Zylinder-Anordnung besitzt weiterhin eine integrierte Feststellbremsbetätigung. Zu diesem Zweck ist der Bremskolben 4 innen zylinderartig hohl ausgebildet. Der Bremskolben 4 enthält einen Feststellbremskolben 22. Die Kolbenstange 6 ist koaxial am Feststellbremskolben 22 endseitig angeformt und durchdringt koaxial den Bremskolben 4. Die Durchdringungsstelle im Bremskolben 4 ist dabei abgedichtet. Der Feststellbremskolben 22 kommt an einem zapfenartigen Anschlag 24 zur Anlage. In dem hohlzylinderförmigen Federraum 25, der durch die Länge des Anschlages 24 und dem Innendurchmesser des zylindrisch hohlen Bremskolbens 4 gebildet ist, ist eine Druckfeder 26 untergebracht. Die Druckfeder 26 dient der Beaufschlagung des Feststellbremskolbens 22. Ihre Wirkung wird dann ausgelöst, wenn die auf der entgegengesetzten Seite des Feststellbremskolbens 22 angeordnete Druckkammer 23 entlüftet wird. Die Druckkammer 23 wird über einen längs der Kolbenstange 6 verlaufenden Druckmittelkanal 31 beaufschlagt und entlüftet, der in einen außerhalb des Zylinders 1 gelegenen Druckmittelanschluß 30 mündet. Insoweit ist durch diese Anordnung eine Sicherheitsfunktion durchführbar, bei der ein abfallender Druck im System zum Auslösen der druckmittelunabhängigen Feststellbremse führt.

Die erfindungsgemäße Kolben-Zylinder-Anordnung ist mit einer den Betriebsweg des Bremskolbens 4 erfassenden Wegmeßeinrichtung 32 komplettierbar. Das von der Wegmeßeinrichtung 32 - die speziell nach Art eines Schiebewiderstandes ausgebildet sein kann und mit der Kolbenstange 6 in Verbindung steht - ausgegebene elektrische Wegsignal wird einer in der Figur nicht dargestellten Elektronikeinheit zugeführt. Die Elektronikeinheit vergleicht den aktuellen Betrag des vom Bremskolben zurückgelegten Weges mit einem Grenzwegbetrag. Bei Erreichen dieses Grenzwegbetrages - infolge voranschreitenden Verschleißes der Bremsbeläge - wird ein Signal für eine Nachstellaktion ausgegeben, so daß über eine Druckmittelbeaufschlagung des Zylinderraumes 14 eine Nachstellbewegung des zylinderbodenseitig als Endanschlag für den Bremskolben 4 dienenden Nachstellkolben 11 erfolgt. Dabei wird der vollzogene Nachstellweg ebenfalls über die Wegmeßeinrichtung 32 kontrolliert und die Druckmittelbeaufschlagung des Zylinderraumes 14 dann gestoppt, sobald eine Mitbewegung des Bremskolbens 4 registriert wird.

Die erfindungsgemäße Betätigungseinrichtung für verschleißspielbehaftete Maschinenelemente - wie Bremsen und Kupplungen - mit integrierter Nachstelleinrichtung zeichnet sich durch einen kompakten und vergleichsweise einfachen Aufbau aus und bietet konstruktive Voraussetzungen dafür, in einem automatischen Gesamtsystem integriert zu werden.

### Bezugszeichenliste

- 1: Zylinder
- 2: Zylinderboden
- 3: Zylinderdeckel
- 4: Bremskolben
- 5: Dichtung
- 6: Kolbenstange
- 7: Dichtung, führend
- 8: Druckmittelanschluß
- 9: Befestigungsbohrung, kolbenstangenseitig
- 10: Befestigungsbohrung, zylinderseitig
- 11: Nachstellkolben
- 12: Dichtung
- 13: Verzahnung
- 14: Zylinderraum
- 15: Halteelement
- 16: Druckmittelanschluß
- 17: Drossel
- 18: Hohlschraube
- 19: Dichtung
- 20: Zylinderstift
- 21: Konus
- 22: Feststellbremskolben
- 23: Druckkammer
- 24: Anschlag
- 25: Federraum
- 26: Druckfeder
- 30: Druckmittelanschluß
- 31: Druckmittelkanal
- 32: Wegmeßeinrichtung

## Patentansprüche

1. Betätigungseinrichtung für verschleißspielbehaftete Maschinenelemente, insbesondere für Bremsen von Schienenfahrzeugen, mit einer druckmittelbetriebenen Kolben-Zylinder-Anordnung, deren Kolbenstange mit einer verschleißspielausgleichenden Nachstelleinrichtung in Wirkverbindung steht,
dadurch gekennzeichnet,
daß die Nachstelleinrichtung aus einem in der Kolben-Zylinder-Anordnung kolbenbodenseitig integrierten und als Endanschlag für einen Bremskolben (4) ausgebildeten Nachstellkolben (11) aufgebaut ist, der zur axialen Arretierung einen dem Zylinderboden (2) zugewandten koaxialen Kolbenstangenansatz aufweist, der gemeinsam mit einem sich am Zylinderboden (2) abstützenden Halteelement (15) eine Arretierungsanordnung bildet, welche eine Bewegung des Nachstellkolbens (11) in Richtung des Bremskolbens (4) ermöglicht und die Gegenbewegung sperrt, wobei zur Bewegung des Nachstellkolbens (11) ein zwischen dem Zylinderboden (2) und dem Nachstellkolben (11) gebildeter Zylinderraum (14) über einen Druckmittelanschluß (16) mit Druckmittel beaufschlagbar ist.

2. Betätigungseinrichtung nach Anspruch 1,
dadurch gekennzeichnet,
daß eine elektrische Wegmeßeinrichtung (32) den Betrag des vom Bremskolben (4) zurückgelegten Weges erfaßt und zur Ermittlung einer Nachstellaktion einer Elektronikeinheit eingangsseitig zur Verfügung stellt, die bei Erreichen eines vorgegebenen Grenzwegbetrages ausgangsseitig ein Signal für die Nachstellaktion generiert.

3. Betätigungseinrichtung nach Anspruch 2,
dadurch gekennzeichnet,
daß die elektrische Wegmeßeinrichtung (32) nach Art eines Schiebewiderstandes ausgebildet ist und mit der Kolbenstange (6) des Bremskolbens (4) in Verbindung steht.

4. Betätigungseinrichtung nach einem der vorstehenden Ansprüche,
dadurch gekennzeichnet,
daß zur Arretierung der Nachstelleinrichtung der Kolbenstangenansatz des Nachstellkolbens (11) eine widerhakenartige Verzahnung (13) aufweist, die mit einem komplementär dazu verzahnten hülsenartigen Halteelement (15) rastend korrespondiert.

5. Betätigungseinrichtung nach einem der vorstehenden Ansprüche,
dadurch gekennzeichnet,
daß zur Rückstellung der Nachstelleinrichtung eine durch den Kolbenboden (2) geschraubte Hohlschraube (18) vorgesehen ist, die mit einem endseitig zumindest innen konisch ausgebildeten Abschnitt des Halteelementes (15) eingreifenden, das Halteelement (15) aufspreizenden Konus (21) zusammenwirkt, wobei zur Aufspreizbarkeit das Halteelement (15) mit mindestens zwei Längsschlitzen versehen ist.

6. Betätigungseinrichtung nach einem der vorstehenden Ansprüche,
dadurch gekennzeichnet,
daß zur Betätigung im Bremsbetrieb ein zwischen dem Nachstellkolben (11) und dem Bremskolben (4) gebildeter Zylinderraum (14) über einen Druckmittelanschluß (16) mit Druckmittel beaufschlagbar ist.

7. Betätigungseinrichtung nach einem der vorstehenden Ansprüche,
dadurch gekennzeichnet,
daß zur Rückstellung des Bremskolben (4) ein sich der Kolbenstange (6) anschließendes, eine Rückstellkraft ausübendes Bremsgestänge oder eine in die Kolben-Zylinder-Anordnung integrierte und zwischen dem Bremskolben (4) und dem Zylinderdeckel (3) angeordnete Rückstellfeder vorgesehen ist.

8. Betätigungseinrichtung nach einem der vorstehenden Ansprüche,
dadurch gekennzeichnet,
daß der Bremskolben (4) innen zylinderartig hohl ausgebildet ist und mit einem integrierten Feststellbremskolben (22) zusammenwirkt, der über eine Druckfeder (26) betätigbar ist, wobei der Feststellbremskolben (22) mit der Kolbenstange (6) in Verbindung steht.

9. Betätigungseinrichtung nach einem der vorstehenden Ansprüche,
dadurch gekennzeichnet,
daß zur Rückstellung und Arretierung des Feststellbremskolbens (22) eine der Druckfeder (26) entgegengesetzt wirkende und über einen Druckmittelanschluß (30) mit Druckmittel beaufschlagbare Druckkammer (23) vorgesehen ist.

10. Betätigungseinrichtung nach einem der vorstehenden Ansprüche,
dadurch gekennzeichnet,
daß zur Druckmittelbeaufschlagung der Feststellbremse die Kolbenstange (6) mit einem integrierten vom Bereich des Feststellbremskolbens (22) ausgehenden, längs der Kolbenstange (6) verlaufenden und im Bereich ihres freien Endes in einen Druckmittelanschluß (30) mündenden Druckmittelkanal (31) ausgestattet ist.

11. Betätigungseinrichtung nach einem der vorstehenden Ansprüche,
dadurch gekennzeichnet,
daß zur Druckmittelbeaufschlagung der Feststellbremse ein von einer Durchgangsbohrung im Feststellbremskolben (22) ausgehender und in eine als Druckmittelanschluß ausgebildete Durchgangsbohrung im Zylinderdeckel (3) mündender flexibler Druckmittelschlauch vorgesehen ist.

12. Betätigungseinrichtung nach einem der vorstehenden Ansprüche,
dadurch gekennzeichnet,
daß zur Druckmittelbeaufschlagung der Feststellbremse eine von einer Durchgangsbohrung zur Druckkammer (23) im Bremskolben (4) ausgehende und parallel zur Kolbenstange verlaufende starre Rohrleitung, die über eine ringförmige Dichtung aus dem Zylinderdeckel (3) längs bewegbar austritt, vorgesehen ist.
